**Europäisches Patentamt**

**European Patent Office**

**Office européen des brevets**

(19)

(11) Veröffentlichungsnummer: **0 047 338**
**B1**

(12)

# EUROPÄISCHE PATENTSCHRIFT

(45) Veröffentlichungstag der Patentschrift:
**29.10.86**

(21) Anmeldenummer: **80106556.6**

(22) Anmeldetag: **25.10.80**

(51) Int. Cl.⁴: **B 29 C 67/14,** F 21 V 21/10

(54) **Mast aus armiertem Kunstharz, der im Schleuderverfahren hergestellt ist.**

(30) Priorität: **29.08.80 DE 3032574**

(43) Veröffentlichungstag der Anmeldung:
**17.03.82 Patentblatt 82/11**

(45) Bekanntmachung des Hinweises auf die Patenterteilung:
**29.10.86 Patentblatt 86/44**

(84) Benannte Vertragsstaaten:
**AT BE CH FR GB LI NL SE**

(56) Entgegenhaltungen:
**DE - A - 1 926 204**
**DE - A - 2 313 122**
**FR - A - 1 488 735**
**US - A - 3 696 242**

(73) Patentinhaber: **G.A. Pfleiderer GmbH & Co KG,**
**D-8430 Neumarkt (DE)**

(72) Erfinder: **Rother, Bruno, Dr.-Eberle-Strasse 38,**
**D-8430 Neumarkt (DE)**
Erfinder: **Trommen, Hartmut, Bayernstrasse 15a,**
**D-8431 Postbauer-Heng (DE)**

(74) Vertreter: **Patentanwälte Czowalla . Matschkur +**
**Partner,**
**Dr.-Kurt-Schumacher-Strasse 23 Postfach 9109,**
**D-8500 Nürnberg 11 (DE)**

## Beschreibung

Die Erfindung richtet sich auf einen im Schleuderverfahren hergestellten Mast aus Kunstharz mit einer Armierung aus einem für das Kunstharz durchlässigen äusseren Vlies mit einem gegenüber dem spezifischen Gewicht des Kunstharzes etwas geringerem spezifischem Gewicht und einer innen auf diesem Vlies aufliegenden Schicht aus vorwiegend in Längsrichtung des Mastes orientierten Fasern, auf dessen Mastzopf der rohrförmige Fuss einer Leuchte, eines Auslegers od.dgl. aufgestülpt und mit in das Kunstharz eindringenden Befestigungsschrauben festgeklemmt ist.

Leuchten, Ausleger od.dgl. werden im allgemeinen mit Klemmschellen oder auch mit Schrauben, die etwa um 120° versetzt am Umfang des rohrförmigen Fusses angeordnet sind, am Mastzopf befestigt. Durch die Windbeanspruchung und den hierdurch hervorgerufenen Schwankungen des Mastes erfolgt zwischen dem Fuss und dem Mastzopf eine gewisse Bewegung, die die Befestigung labil gestaltet. Insbesondere arbeiten sich die Klemmschelle oder die Schraubenköpfe in den Kunststoff des Mastzopfes ein und führen damit zu einem Bewegungsspiel, welches höchst unerwünscht ist. Man hat bisher noch keine geeigneten und wirtschaftlich tragbaren Mittel gefunden, dieser Erscheinung wirksam zu begegnen. Auch die FR-A 1 488 735 ist nicht geeignet, hierzu einen entsprechenden Weg zu weisen. Sie offenbart ein Bauteil aus armiertem Kunstharz, wobei in die Kunstharzschicht ein Halteelement eingegossen ist, das an der in den Kunstharz eingebetteten Armierung befestigt ist. Die Herstellung eines solchen speziell gestalteten Bauteils ist viel zu aufwendig, um der Arretierung eines auf den Mastzopf aufgestülpten Leuchtenfusses oder Auslegers dienen zu können. Daraus stellt sich die Aufgabe der Erfindung, eine Befestigung zwischen Mastzopf und übergestülptem rohrförmigen Fuss zu schaffen, die die Mängel der bekannten Ausführungen vermeidet, ohne einen übermässigen Aufwand zu erfordern.

Erfindungsgemäss lässt sich dieses Ziel dadurch erreichen, dass die Armierung in etwa dem Überdeckungsbereich des Fusses zwischen dem Vlies und der Faserschicht eine Einlage aus einem flexiblen Drahtgewebe aufweist, an der die Befestigungsschrauben einen festen, sie verankernden Widerstand finden.

Voraussetzung ist allerdings die besondere Art der Armierung, da nur diese zu gewährleisten in der Lage ist, dass die Armierung nicht bis in die Oberfläche des Mastes dringt, sondern zuverlässig innerhalb der Wand verbleibt. Das während der Rotationsbewegung der Form in diese eingesprühte Kunstharz dringt nämlich durch die Armierung und insbesondere auch durch deren zwar formbeständige, aber für das Kunstharz durchlässige Aussenschicht, z.B. ein Vlies, hindurch. Dieses schwimmt infolge seines geringeren spezifischen Gewichts in der Kunstharzschicht. Die in diese Armierung eingebettete Drahtgewebeeinlage wird von dem Vlies getragen und nimmt auf diese Weise gleichfalls eine Lage innerhalb der Wanddicke des Kunststoffmastes ein. Nachdem das Kunstharz ausgehärtet ist, stellt aber das Drahtgewebe eine zuverlässige Verstärkung des Mastzopfes dar. Wenn nun die in dem rohrförmigen Fuss der Leuchte, des Auslegers od.dgl. sitzenden Befestigungsschrauben angezogen werden, dringen sie nur in die äusserste Schicht des Kunststoffes ein und treffen dann auf das Drahtgewebe, wo sie nicht nur einen festen Widerstand, sondern gewissermassen auch eine Verankerung finden, so dass die Ausbildung eines Spiels zwischen dem Fuss und dem Mastzopf wirksam verhindert wird.

Es liegt im Rahmen der Erfindung, dass die Länge des Drahtgewebes dem Umfang des Mastzopfes etwa entspricht, so dass die Verstärkung praktisch in einer Lage innerhalb der Wandung des Mastzopfes vorliegt. Vorteilhaft besteht das Drahtgewebe aus nichtrostendem Stahl. Dieser ist wegen seiner besonderen Festigkeitseigenschaften aber vor allem deshalb zu bevorzugen, weil dann, wenn die Befestigungsschrauben bis zu dem Drahtgewebe in den Mastzopf eindringen, keine Rostgefahr besteht.

Einzelheiten der Erfindung ergeben sich aus der folgenden Beschreibung einer bevorzugten Ausführungsform der Erfindung sowie anhand der Zeichnung. Hierbei zeigen:

Fig. 1 einen auf dem Mastzopf eine Leuchte tragenden Mast;

Fig. 2 den Mastzopf in vergrösserter Schnittdarstellung;

Fig. 3 eine vergrösserte Darstellung eines Details III aus Fig. 2 und

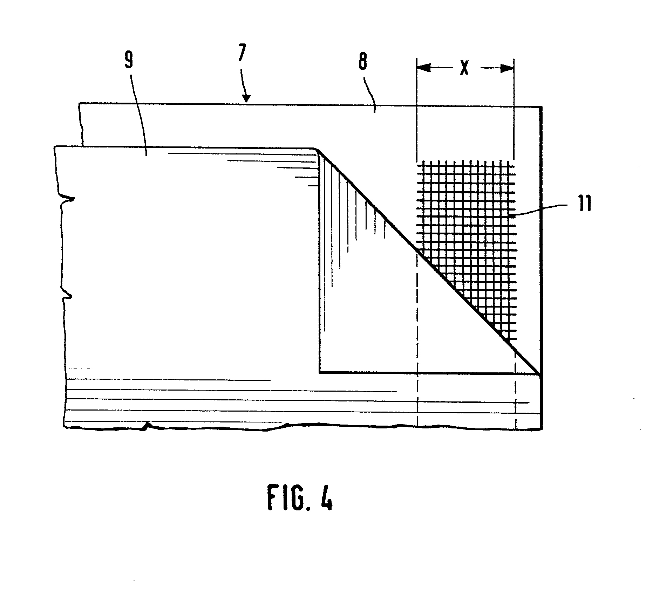

Fig. 4 eine Draufsicht auf die teilweise abgewikkelte Armierung.

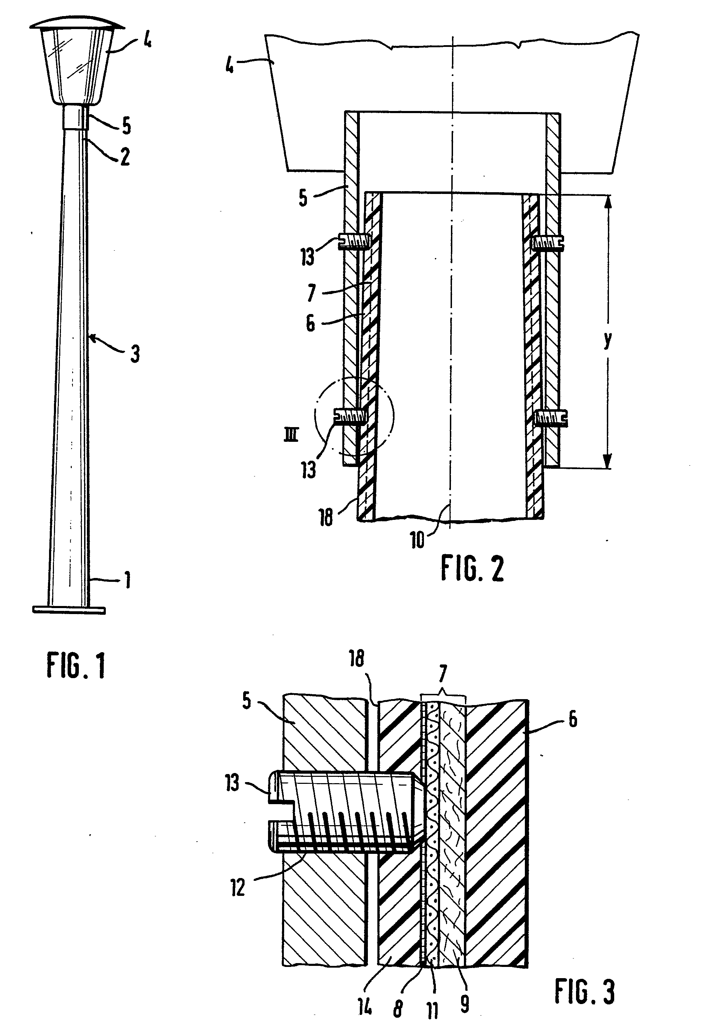

Der vom Mastfuss 1 zur Mastspitze 2 konisch zulaufende Mast 3 trägt beispielsweise eine Leuchte 4, die mit einem rohrförmigen Fuss 5 versehen ist, der, wie dies Fig. 2 erkennen lässt, über den Mastzopf 6 gestülpt ist. Der Mast 3 ist im Schleuderverfahren aus einem Kunstharz hergestellt. In die Wandung ist eine Armierung 7 derart eingebettet, dass sie nicht an die äussere Wandfläche 18 tritt, vielmehr allseits vom Kunstharz umschlossen ist.

Die Armierung 7 des Mastes 3 besteht aus einem äusseren Vlies 8, welches für das Kunstharz durchlässig ist und ein spezifisches Gewicht hat, das etwas geringer ist als das spezifische Gewicht des zur Herstellung des Mastes 3 verwendeten Kunstharzes. Dieses Vlies 8 liegt an der Aussenseite der Armierung 7. Darüber befindet sich eine Schicht 9 aus vorzugsweise in Richtung der Mastachse 10 orientierten Mineral- oder Glas- od.dgl. Fasern.

Zwischen beiden Schichten ist, wie die Fig. 3 u. 4 erkennen lassen, in einem beschränkten Bereich eine Verstärkung aus einem Drahtgewebe 11 eingefügt. Die Breite x dieses Drahtgewebes 11 entspricht etwa dem Mass y, um welches der rohrförmige Fuss 5 der Leuchte 4 den Mastzopf 6 übergreift.

In diesem Bereich ist der Fuss 5 mit Gewindebohrungen 12 versehen, die beispielsweise im Abstand von 120° in zwei Reihen übereinander um den Umfang des Fusses 5 verteilt sind. In diese Gewindebohrungen 12 ist je eine Madenschraube 13 eingesetzt, die beim Anziehen in die äussere Kunstharzschicht 14 des Mastes 3 eindringt und dort in dem Drahtgewebe 11 einen festen Widerstand findet, so dass auch bei beispielsweise windbedingten Bewegungen zwischen Mastzopf 6 und rohrförmigem Fuss 5 eine Lockerung praktisch ausgeschlossen ist.

**Patentansprüche**

1. Im Schleuderverfahren hergestellter Mast (3) aus Kunstharz mit einer Armierung (7) aus einem für das Kunstharz durchlässigen äusseren Vlies (8) mit einem gegenüber dem spezifischen Gewicht des Kunstharzes geringerem spezifischem Gewicht und einer innen auf dem Vlies (8) aufliegenden Schicht (9) aus vorwiegend in Längsrichtung der Mastachse (10) orientierten Fasern, auf dessen Mastzopf (6) der rohrförmige Fuss (5) einer Leuchte (4), eines Auslegers od.dgl. aufgestülpt und mit in das Kunstharz eindringenden Befestigungsschrauben (13) festgeklemmt ist, dadurch gekennzeichnet, dass die Armierung (7) in etwa dem Überdeckungsbereich des Fusses (5) zwischen dem Vlies (8) und der Faserschicht (9) eine Einlage (11) aus einem flexiblen Drahtgewebe aufweist, an der die Befestigungsschrauben (13) einen festen, sie verankernden Widerstand finden.

2. Mast nach Anspruch 1, dadurch gekennzeichnet, dass die Länge des Drahtgewebes (11) dem Umfang des Mastzopfes (6) entspricht.

3. Mast nach Anspruch 1 oder 2, dadurch gekennzeichnet, dass das Drahtgewebe (11) aus nichtrostendem Stahl besteht.

**Claims**

1. A pole (3) of resin produced by rotational moulding, with a reinforcement (7) formed from an outer fleece (8) which is permeable to the resin and has a specific weight relatively smaller than that of the resin and an inner layer (9) overlaying the fleece (8) and formed of fibres oriented predominantly in the longitudinal direction of the axis (10) of the pole, on the top (6) of which pole the pipe-shaped foot (5) of a lamp (4), an outrigger or the like is placed and clamped fast by securing screws (13) penetrating the resin, characterised in that the reinforcement (7) comprises, between the fleece (8) and the fibre layer (9), in approximately the region overlapped by the foot (5), an insert (11) formed of flexible wire mesh against which the securing screws (13) find a secure self-anchoring resistance.

2. A pole according to Claim 1, characterised in that the length of the wire mesh (11) corresponds to the circumference of the top (6) of the pole.

3. A pole according to Claim 1 or 2, characterised in that the wire mesh (11) is formed of stainless steel.

**Revendications**

1. Poteau (3) en résine synthétique fabriqué par moulage par rotation ou centrifugation, muni d'une armature (7) consistant en une nappe (8) extérieure perméable à la résine synthétique ayant un poids spécifique plus faible que le poids spécifique de la résine synthétique et en une couche (9) reposant à l'intérieur sur la nappe (8), laquelle couche présente de façon prédominante des fibres orientées dans le sens longitudinal de l'axe du poteau (10), l'embase tubulaire (5) d'un luminaire (4), d'une console ou similaire étant enfoncée sur la cime du poteau (6) et bloquée par des boulons de fixation (13) pénétrant dans la résine, caractérisé en ce que l'armature (7) présente sensiblement dans la zone de recouvrement de l'embase (5) entre la nappe (8) et la couche de fibres une garniture (11) en treillis métallique flexible, sur laquelle les boulons de fixation (13) trouvent une résistance ferme d'ancrage.

2. Poteau selon la revendication 1, caractérisé en ce que la longueur du treillis métallique (11) correspond à la périphérie de la cime du poteau (6).

3. Poteau selon la revendication 1 ou 2, caractérisé en ce que le treillis métallique (11) est en acier inoxydable.

FIG. 1

FIG. 2

FIG. 3

FIG. 4